# EUROPEAN PATENT APPLICATION

(11) **EP 4 559 723 A1**
(43) Date of publication of application: **28.05.2025**
(21) Application number: 24215121.5
(22) Date of filing: 25.11.2024
(51) Int. Cl.: B60L 3/00, B60L 3/04, B60L 58/10, B60L 58/18, H01M 10/48, H02J 7/00

(54) **ENERGY STORAGE SYSTEM, SAFETY MANAGEMENT METHOD FOR THE SAME, AND CONTROL SYSTEM**

(30) Priority: 27.11.2023 CN 202311595914
(71) Applicant: Airbus (China) Enterprise Management and Services Company Limited, Beijing 101312 (CN)
(72) Inventor: JIN, Xiaozhao, Beijing, 101312 (CN); MENG, Bing, Beijing, 101312 (CN)
(74) Representative: Abel & Imray LLP

(57) **Abstract**

This disclosure relates to an energy storage system, a safety management method for the energy storage system and a control system. The energy storage system includes multiple energy storage units and an energy storage controller configured to communicate with the multiple energy storage units, receive abnormal signals of the multiple energy storage units, and send the abnormal signals to an external control unit. The multiple energy storage units are further configured to be capable of sending the abnormal signals to the external control unit. The energy storage system, the safety management method for the energy storage system and the control system according to the present disclosure can provide redundant alarm and protection functions.

## Description

### FIELD

The present disclosure relates to energy storage systems, and more specifically, to an energy storage system, a safety management method for the energy storage system, and a related control system.

### BACKGROUND

The contents in this section only provide background information related to the present disclosure, which may not constitute the prior art.

Energy storage systems are widely applied in various fields. For example, in the aviation field, energy storage systems are widely applied in hybrid helicopters, commercial aircrafts, electric vertical take-off and landing aircrafts, etc. Compared with the applications of energy storage systems in other technical fields (for example, ground applications such as vehicles), the aviation field has higher requirements for safety of the energy storage systems. In the existing energy storage systems, the safety management system of the energy storage system (including fuel cell, power battery, supercapacitor, etc.) usually adopts a central energy storage controller to monitor, balance and control all energy storage units. All signals are processed by the central energy storage controller. This kind of management system has long communication wiring, long processing time and delays. In addition, in the existing energy storage systems, there is only one signal circuit connected to an external central control unit and does not have redundant alarm and protection functions. Once the central energy storage controller malfunctions, alarm signals cannot be sent out in time, such that the corresponding protection mechanism cannot be triggered. On the other hand, if another backup energy storage system is provided to provide the redundant alarm and protection functions, the weight may be adversely increased and the energy density and the endurance (such as, driving distance or flying distance) may be adversely affected.

In addition, in the existing energy storage systems, once an abnormal signal is detected, the central energy storage controller will cut off a high-voltage circuit of the entire energy storage system to avoid severe dangerous situations. However, a sudden power outage may cause secondary safety hazards, and especially in aviation applications where sudden power outage of energy storage systems is usually not allowed.

Therefore, improving the safety of the energy storage systems and improving the safety management of the energy storage system are the directions for improvement in the energy storage system.

### SUMMARY

One purpose of the present disclosure is to provide an energy storage system that can provide redundant alarm and protection functions and improve the safety of the energy storage system. Another purpose of the present disclosure is to improve the safety management of the energy storage system, to control the single energy storage modules in the energy storage system separately, without cutting off power supply of the entire energy storage system when an energy storage module in the energy storage system is abnormal. Another purpose of the present disclosure is to provide early warning for an abnormality in the energy storage system.

In one aspect of the present disclosure, an energy storage system is provided. The energy storage system comprises: a plurality of energy storage units; and an energy storage controller configured to communicate with the plurality of energy storage units, receive abnormal signals of the plurality of energy storage units, and send the abnormal signals to an external control unit. The plurality of energy storage units are further configured to be capable of sending the abnormal signals to the external control unit.

The energy storage system according to the present disclosure can provide redundant alarm and protection functions. Even when the energy storage controller fails, the abnormal signal of the energy storage system can be sent to the external control unit to activate alarms and corresponding protection functions. Therefore, it is unnecessary to arrange additional backup energy storage system, thereby avoiding the problems such as weight increase and impact on the endurance (for example, driving distance or flying distance) resulted from the arrangement of the backup energy storage system.

Each of the plurality of energy storage units optionally comprises: an energy storage module, a module distributor and a module controller. The module distributor is configured to connect or disconnect a circuit connection of the energy storage module. The module controller comprises a signal acquisition port and a microprocessor. The signal acquisition port is configured to receive detection parameters of the energy storage module. The microprocessor is configured to: receive the detection parameters from the signal acquisition port to monitor a status of the energy storage module; and send an abnormal signal to the energy storage controller and the external control unit and send a control signal to the module distributor to disconnect the circuit connection of the energy storage module, when an abnormality in the energy storage module is detected.

The module controller is optionally configured to send the abnormal signal to the external control unit when a failure of the energy storage controller is detected.

The energy storage modules in the plurality of energy storage units are optionally connected with each other in parallel. The module distributor comprises a first high-voltage contactor and a second high-voltage contactor connected to a positive pole and a negative pole of the energy storage module, respectively. When the module distributor of one energy storage unit receives the control signal, the first high-voltage contactor and the second high-voltage contactor of the one energy storage unit are turned off to disconnect the circuit connection of the energy storage module of the one energy storage unit. Thus, an active protection for energy storage units connected in parallel can be provided.

The energy storage modules in the plurality of energy storage units are optionally connected with each other in series. The module distributor comprises a first high-voltage contactor and a second high-voltage contactor connected to a positive pole and a negative pole of the energy storage module, respectively, and the module distributor further comprises a third high-voltage contactor configured to be turned off when the first high-voltage contactor and the second high-voltage contactor are turned on. When the module distributor of one energy storage unit receives the control signal, the first high-voltage contactor and the second high-voltage contactor of the one energy storage unit are turned off and the third high-voltage contactor of the one energy storage unit is turned on, so as to disconnect the circuit connection of the energy storage module of the one energy storage unit and form a circuit path for energy storage modules in other energy storage units. Thus, an active protection for energy storage units connected in series can be provided.

Therefore, the energy storage system according to the present disclosure can separately monitor and control the single energy storage modules. Once an abnormality of an energy storage module is detected, the abnormal signal of the energy storage module is sent to the external control unit, to trigger alarm and protection functions as early as possible. Moreover, only the circuit of the abnormal energy storage module is powered off, without a sudden power outage of the entire energy storage system.

The module distributor optionally further comprises a first fuse and a second fuse connected to the positive pole and the negative pole of the energy storage module, respectively. When a current through the energy storage module is excessively large, the first fuse and the second fuse are fused to disconnect the circuit connection of the energy storage module. Therefore, a passive protection of the energy storage modules can be provided.

The energy storage module may be a fuel cell, a power battery or a supercapacitor.

Preferably, the detection parameters include voltage, current, temperature and strain.

The energy storage module optionally includes a plurality of battery cells. A flexible sensor strip is optionally embedded inside each of the plurality of battery cells to measure temperature and strain.

The energy storage system is optionally an aviation energy storage system.

In another aspect of the present disclosure, a safety management method for an energy storage system is provided. The energy storage system comprises a plurality of energy storage units and an energy storage controller. The safety management method comprises: monitoring statuses of the plurality of energy storage modules; and sending an abnormal signal to the energy storage controller and sending the abnormal signal to an external control unit by the energy storage controller, when an abnormality of the plurality of energy storage modules is detected. The security management method further comprises directly sending the abnormal signal to the external control unit.

Monitoring statuses of the plurality of energy storage modules optionally comprises: acquiring detection parameters of each energy storage module and determining the status of each energy storage module. The safety management method optionally further comprises: cutting off a circuit connection of the abnormal energy storage module among the plurality of energy storage modules after sending the abnormal signal.

The energy storage module optionally comprises a plurality of battery cells, and the safety management method optionally comprises: acquiring detection parameters of each of the plurality of battery cells.

The detection parameters optionally comprise voltage, current, temperature and strain.

The abnormal signal may optionally be directly sent to the external control unit when the energy storage controller fails.

The energy storage system may be an aviation energy storage system.

In another aspect of the present disclosure, a control system is provided. The control system comprises a central control system, and further comprises the energy storage system according to the present disclosure. The central control system is the external control unit, and is configured to receive abnormal signals and activate alarms and corresponding protection devices based on the abnormal signals.

The present disclosure provides an improved energy storage system, an improved safety management method for the energy storage system and an improved control system, which can provide redundant alarm and protection functions, can separately monitor and control the single energy storage modules and monitor the statuses of single energy storage units in the respective energy storage modules. Therefore, the abnormal signal can be sent out as early as possible to activate alarm and protection functions earlier. Further, when the energy storage module in some of the multiple energy storage units is abnormal, only the circuit of the abnormal energy storage module is cut off. It is unnecessary to cut off the circuits of all the energy storage modules, thereby avoiding a sudden power outage of the entire energy storage system, and further avoiding the adverse effects caused by the sudden power outage of the energy storage system.

### BRIEF DESCRIPTION OF THE DRAWINGS

Embodiments of the present disclosure are to be described below by way of example only with reference to the drawings. Throughout the drawings, identical features or components are denoted by identical reference numerals. The drawings are unnecessarily to scale. In the drawings:
Figure 1 shows a schematic diagram of an energy storage system according to an embodiment of the present disclosure;
Figure 2 shows a wiring diagram of the energy storage system as shown in Figure 1;
Figure 3 shows a schematic diagram of an energy storage unit in the energy storage system;
Figure 4 shows a schematic diagram of a module controller in the energy storage unit monitoring a status of an energy storage module;
Figure 5 shows a schematic diagram of an internal connection in the energy storage unit;
Figure 6 shows a schematic diagram of another internal connection in the energy storage unit;
Figure 7 shows a schematic diagram of a control system according to an embodiment of the present disclosure; and
Figure 8 shows a signal flow diagram of an abnormal signal of the energy storage system in the control system.

### DETAILED DESCRIPTION

The following description is merely illustrative in nature and is not intended to limit the present disclosure, the application and usage thereof. It should be understood that throughout the drawings, similar reference numbers indicate the same or similar parts and features. The drawings only schematically represent the concepts and principles of the embodiments of the present disclosure, rather than necessarily show the specific dimensions and proportions of the embodiments of the present disclosure. Certain portions in certain figures may be exaggerated to illustrate relevant details or structures of the embodiments of the present disclosure.

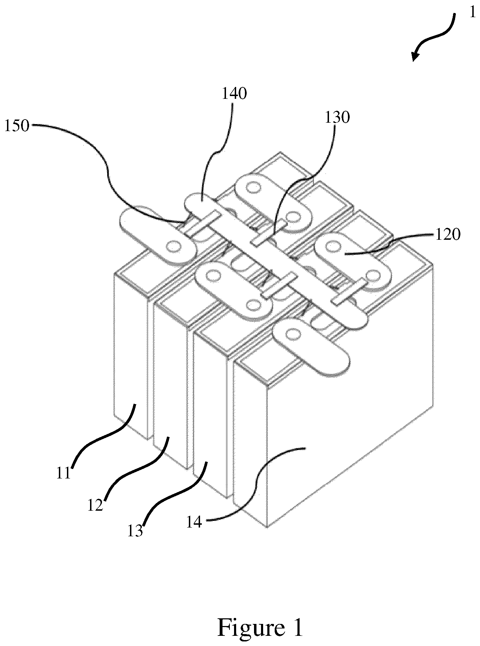

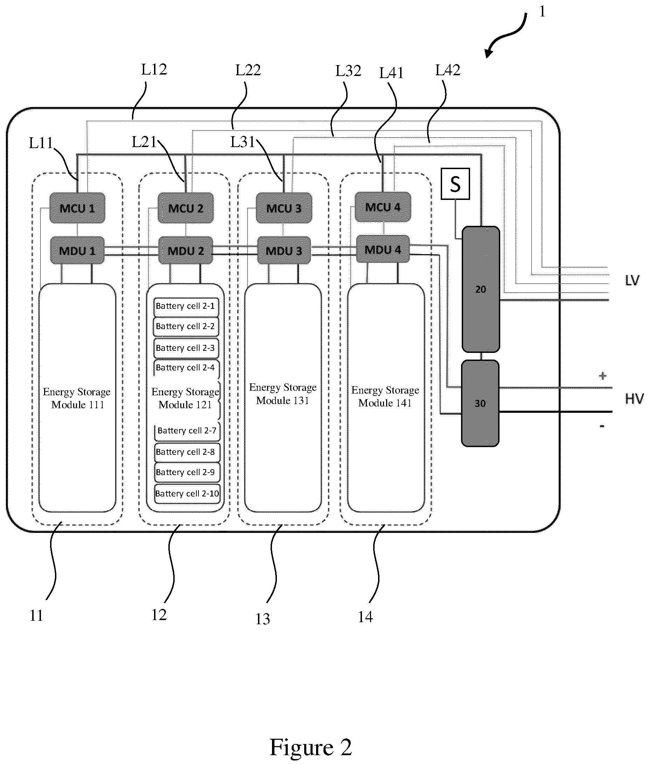

Figure 1 shows a schematic diagram of an energy storage system according to an embodiment of the present disclosure. Figure 2 shows a wiring connection diagram of the energy storage system. The energy storage system 1 includes multiple energy storage units, an energy storage controller 20 and an energy distribution unit 30. The energy storage system 1 may be an aviation energy storage system, a vehicle energy storage system, or an energy storage system in other applications. Four energy storage units are shown in Figure 1, namely, a first energy storage unit 11, a second energy storage unit 12, a third energy storage unit 13, and a fourth energy storage unit 14. The first energy storage unit 11, the second energy storage unit 12, the third energy storage unit 13 and the fourth energy storage unit 14 are connected in series through a bus bar 120. However, the present disclosure is not limited hereto. The energy storage system 1 may also include more or less energy storage units, and the energy storage units may also be connected in parallel as needed. The first energy storage unit 11 sends a status signal of the first energy storage unit 11 to the energy storage controller 20 through a line L11. The second energy storage unit 12 sends a status signal of the second energy storage unit 12 to the energy storage controller 20 through a line L21. The third energy storage unit 13 sends a status signal of the third energy storage unit 13 to the energy storage controller 20 through a line L31. The fourth energy storage unit 14 sends a status signal of the fourth energy storage unit 14 to the energy storage controller 20 through a line L41. The energy storage controller 20 is provided to monitor and manage the energy storage units, and is configured to communicate with the energy storage units, and receive the status signals of the energy storage units, including abnormal status signals. Once the energy storage controller 20 receives the abnormal status signal from the energy storage units, the energy storage controller 20 sends the abnormal status signal of the energy storage module to an external control unit, for example, a central control system of an aircraft or vehicle, to trigger an alarm device and activate the corresponding protection mechanism. In addition, the energy storage controller 20 also monitors gas in the entire energy storage system through a gas sensor S, for example, monitoring CO, CH₄, and C₃H₈ in the energy storage system. Once it is detected that the content of these gases exceeds a predetermined range, the gas sensor S sends an abnormal signal to the energy storage controller 20.

In addition, the first energy storage unit 11, the second energy storage unit 12, the third energy storage unit 13, and the fourth energy storage unit 14 are further configured to send abnormal signals to the external control unit through lines L12, L22, L32, and L42 respectively, when an abnormal state of the corresponding energy storage unit is detected. For example, when the energy storage controller 20 fails, the first energy storage unit 11 sends an abnormal signal thereof to the external control unit through the line L12, and therefore can still trigger the alarm device and initiate the corresponding protective measures. Therefore, this arrangement provides redundant alarm and protection functions, and it is unnecessary to provide an additional backup battery system to provide this redundant alarm and protection functions, thereby avoiding the problems such as weight increase and impact on the endurance caused by providing the backup battery system.

The first energy storage unit 11, the second energy storage unit 12, the third energy storage unit 13, and the fourth energy storage unit 14 have the same structure. The structure of each energy storage unit is introduced below using the second energy storage unit 12 as an example.

The second energy storage unit 12 includes an energy storage module 121, a module distributor MDU2 and a module controller MCU2. The energy storage module 121 may be a fuel cell, a power battery or a supercapacitor, and may include multiple energy storage units (e.g., multiple battery cells). Figure 2 schematically shows that the energy storage module includes ten battery cells, namely, a battery cell 2-1, a battery cell 2-2, a battery cell 2-3, a battery cell 2-4, ..., a battery cell 2- 7, a battery cell 2-8, a battery cell 2-9 and a battery cell 2-10. There is no doubt that the energy storage module 121 may include more or less battery cells or other energy storage units.

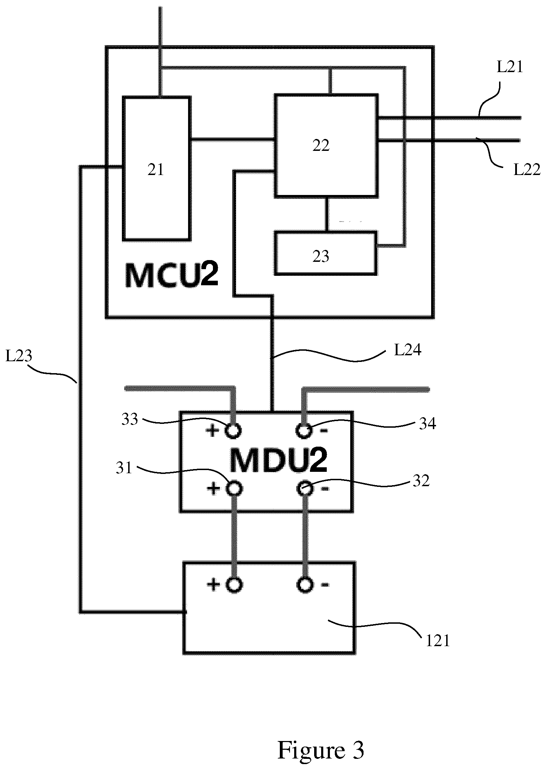

Figure 3 shows a schematic diagram of the connection (through SPI or bus) among the module controller MCU2, the module distributor MDU2 and the energy storage module 121. The module controller MCU2 is configured to monitor the status of the energy storage module 121 and send the status of the energy storage module 121 to the energy storage controller 20 via the line L21. The module distributor MDU2 is provided to connect the energy storage module 121 to the energy distribution unit 30 in the energy storage system 1 in a high-voltage circuit. The module distributor MDU2 is configured to connect or disconnect the circuit connection of the energy storage module 121 to provide active protection and passive protection. The module distributor MDU2 includes four connection ports 31, 32, 33 and 34. The ports 31 and 32 are configured to be connected to the energy storage module 121. The ports 33 and 34 are configured to be connected to corresponding ports of a neighboring module distributors to connect the energy storage module 121 to energy storage modules in other energy storage units.

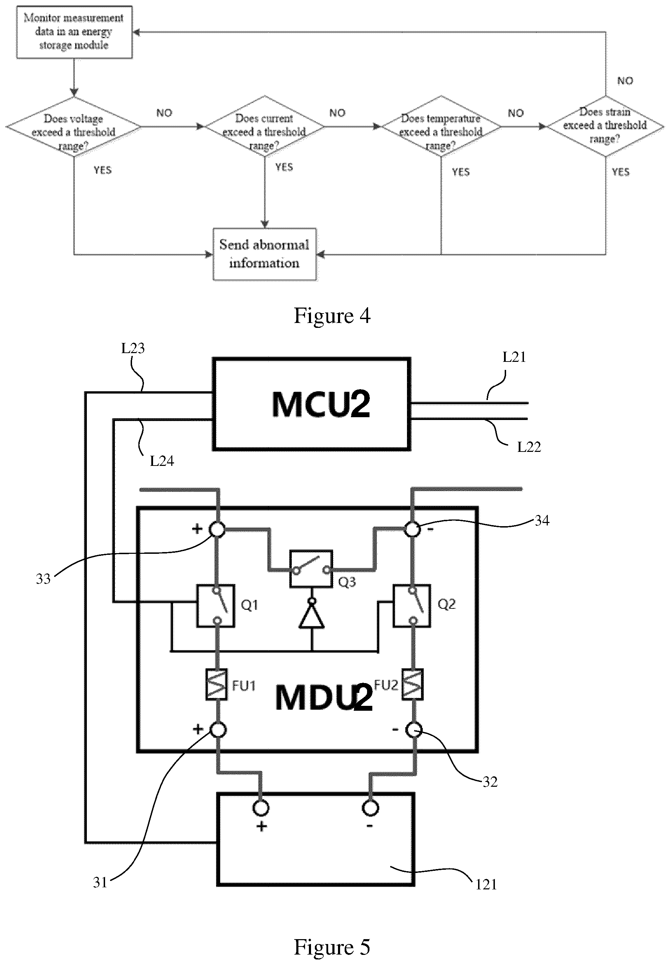

As shown in Figure 3, the module controller MCU2 includes a signal acquisition port 21, a microprocessor 22 and a memory 23. Figure 4 shows a flow chart of the module controller MCU2 monitoring the status of the energy storage module 121. The signal acquisition port 21 is configured to acquire detection parameters of the energy storage module 111 and send the acquired detection parameters to the microprocessor 22. The signal acquisition port 21 acquires detection parameters of all energy storage units (for example, the battery cell 2-1 to the battery cell 2-10) in the energy storage module 121, including voltage, current, temperature and strain. The voltage and the current may be measured by a Hall voltage sensor 130 (shown in Figure 1 only). Preferably, the detection parameters of all the battery cells 2-1 to 2-10 are measured in real time. More preferably, each battery cell in the energy storage module 121 is embedded with a sensor for measuring parameters thereof, for example, a flexible sensor strip 150 (as shown in Figure 1 only) for measuring temperature and strain, to measure the temperature and strain of the battery cell. Preferably, the flexible sensor strip 150 is an FBG sensor strip. The strain status within a battery cell usually reflects the status of physical and chemical reactions inside the battery cell. Before the battery cell fails, gas and/or heat are generally generated, resulting in an abnormal increase in strain. Therefore, the status of the physical and chemical reactions inside the battery cell can be monitored by measuring the strain in the battery cell. This is conducive to an early detection of the failure of single battery cells in the energy storage module, thereby providing an early warning of abnormality about a battery cell and the energy storage module in which the battery cell is located. The measured current, voltage, temperature and strain are sent to the flexible printed circuit 140 (only shown in Figure 1 only) and sent to the signal acquisition port 21 of the module controller MCU2 through the line 123.

The microprocessor 22 receives the detection parameters of the energy storage module 121 from the signal acquisition port 21, and calls the data determination rules of each parameter item stored in the memory 23, thereby determines the status of the energy storage module 121, and sends the real-time status information in a predefined format to the energy storage controller 20 via the line L21, such that the real-time status information is sent to the external control unit through the energy storage controller 20. For example, it is determined whether the received voltage, current, temperature and strain exceed the corresponding threshold ranges. For example, when the voltage exceeds the threshold range (for example, above 4.25V or below 2.45V), or the current exceeds the threshold range, or the temperature exceeds the threshold range (for example, above 60°C), or the strain exceeds the threshold range (for example, exceeds 10%), the microprocessor 22 determines that the battery cell is abnormal, and then determines that the energy storage module 121 is abnormal. When determining that an abnormality occurs in the energy storage module 121, the microprocessor 22 sends an abnormal signal to the energy storage controller 20 through the line L21. The energy storage controller 20 sends the abnormal signal to the external control unit to trigger the alarm and activate the corresponding protection mechanism. In addition, the microprocessor 22 can also communicate with the external control unit and send the abnormal signal to the external control unit through the line L22, thereby providing redundant alarm and protection functions. After sending the abnormal signal, the microprocessor 22 sends a control signal to the module distributor MDU2 through the line L24 to disconnect the circuit connection of the energy storage module 121.

Figure 5 shows a schematic diagram of an internal connection of the module distributor MDU2. This internal connection is used for the case where adjacent energy storage modules are connected to each other in series. As shown in Figure 5, a fuse FU1 and a first high-voltage contactor Q1 are connected between the port 31 and the port 33 of the module distributor MDU2. A fuse FU2 and a second high-voltage contactor Q2 are connected between the port 32 and the port 34 of the module distributor MDU2. A third high-voltage contactor Q3 is connected between the port 33 and the port 34. When the energy storage module 121 is in a normal state, the first high-voltage contactor Q1 and the second high-voltage contactor Q2 are turned on, the third high-voltage contactor Q3 is turned off, such that the energy storage module 121 is connected to a high-voltage circuit of the energy storage system 1 and is connected with other energy storage modules of other energy storage cells in series.

When an abnormally large current is generated inside the energy storage module 121, such as when the current inside the energy storage module 121 exceeds the current threshold, the fuse FU1 and the fuse FU2 are directly fused, thereby powering off the energy storage module 121 and disconnecting the abnormal energy storage module 121 from the main high-voltage circuit of the energy storage system 1, thereby providing passive protection.

When the microprocessor 22 of the module controller MCU2 sends out an abnormal signal and sends a control signal to the module distributor MDU2, the first high-voltage contactor Q1 and the second high-voltage contactor Q2 of the module distributor MDU2 are turned off, and the third high-voltage contactor Q3 is turned on. Therefore, the circuit of the energy storage module 121 is powered off, and the abnormal energy storage module 121 is disconnected from the main high-voltage circuit, thereby providing active protection, and forming a circuit path for the energy storage modules of other energy storage units to ensure the normal operation of other energy storage modules.

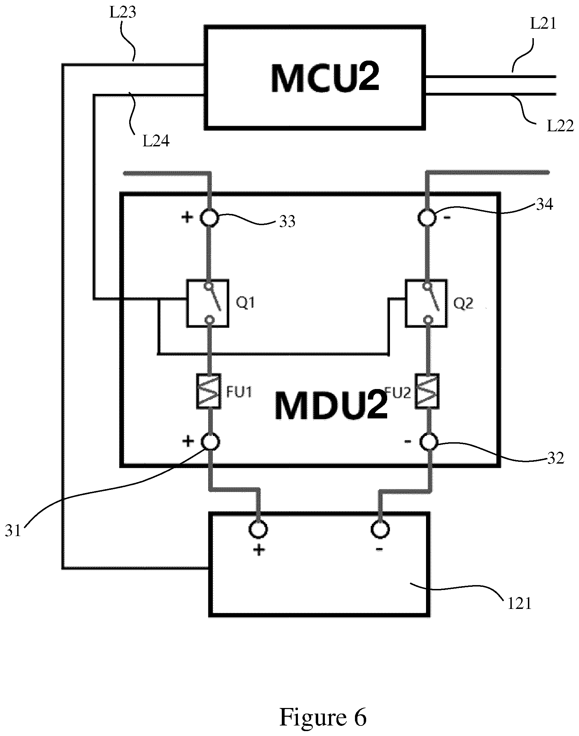

Figure 6 shows a schematic diagram of another internal connection of the module distributor MDU2. This internal connection is used for the case where adjacent energy storage modules are connected with each other in parallel. As shown in Figure 6, the internal connection of the module distributor MDU2 for parallel connection is substantially the same as the internal connection of the module distributor MDU2 for series connection, except that no third high-voltage contactor Q3 is provided.

When the energy storage module 121 is in a normal state, the first high-voltage contactor Q1 and the second high-voltage contactor Q2 are turned on to connect the energy storage module 121 to the main high-voltage circuit of the energy storage system 1 and connect the energy storage module 121 with other energy storage modules in parallel. When an abnormally large current is generated inside the energy storage module 121, the fuse FU1 and the fuse FU2 are directly fused, thereby powering off the energy storage module 121 and disconnecting the abnormal energy storage module 121 from the main high-voltage circuit of the energy storage system 1, thereby providing passive protection. When the microprocessor 22 of the module controller MCU2 sends out an abnormal signal and then sends a control signal to the module distributor MDU2, the first high-voltage contactor Q1 and the second high-voltage contactor Q2 of the module distributor MDU2 are turned off, so that the abnormal energy storage module 121 is disconnected from the main high-voltage circuit, thereby providing active protection.

The above description about the second energy storage unit 12 is also applicable to the first energy storage unit 11, the third energy storage unit 13 and the fourth energy storage unit 14. As shown in Figure 2, the first energy storage unit 11 includes an energy storage module 111, a module distributor MDU1 and a module controller MCU1. The third energy storage unit 13 includes an energy storage module 131, a module distributor MDU3 and a module controller MCU3. The fourth energy storage unit 14 includes an energy storage module 141, a module distributor MDU4 and a module controller MCU4.

During the operation, the module controller MCU1 of the first energy storage unit 11, the module controller MCU2 of the second energy storage unit 12, the module controller MCU3 of the third energy storage unit 13 and the module controller MCU4 of the fourth energy storage unit 14 communicate with the energy storage controller 20 through lines L11, L21, L31 and L41, respectively. The module controllers MCU1, MCU2, MCU3 and MCU4 send status information of the energy storage module 111, the energy storage module 121, the energy storage module 131 and the energy storage module 141, and send abnormal signals of the energy storage module 111, the energy storage module 121, the energy storage module 131 and the energy storage module 141 to the energy storage controller 20, respectively. Further, the module controllers MCU1, MCU2, MCU3 and MCU4 send the abnormal signals of the energy storage module 111, the energy storage module 121, the energy storage module 131 and the energy storage module 141 to the external control unit through lines L12, L22, L32 and L42, respectively, so that the alarm can be triggered as early as possible. Moreover, when any one of the energy storage modules 111, 121, 131 and 141 is abnormal, only the circuit of the abnormal energy storage module is cut off. For example, when an abnormality occurs in the energy storage module 121, the module controller MCU2 cuts off the circuit connection of the abnormal energy storage module 121, while the energy storage module 111, the energy storage module 131 and the energy storage module 141 still operate normally. Therefore, the energy storage system 1 can separately monitor and control the single energy storage modules. When the energy storage modules in some of the multiple energy storage units are abnormal, only the circuit of the abnormal energy storage module is cut off. It is unnecessary to cut off the circuits of all the energy storage modules, thereby avoiding a sudden power outage of the entire energy storage system, and further avoiding the adverse effects caused by the sudden power outage of the energy storage system.

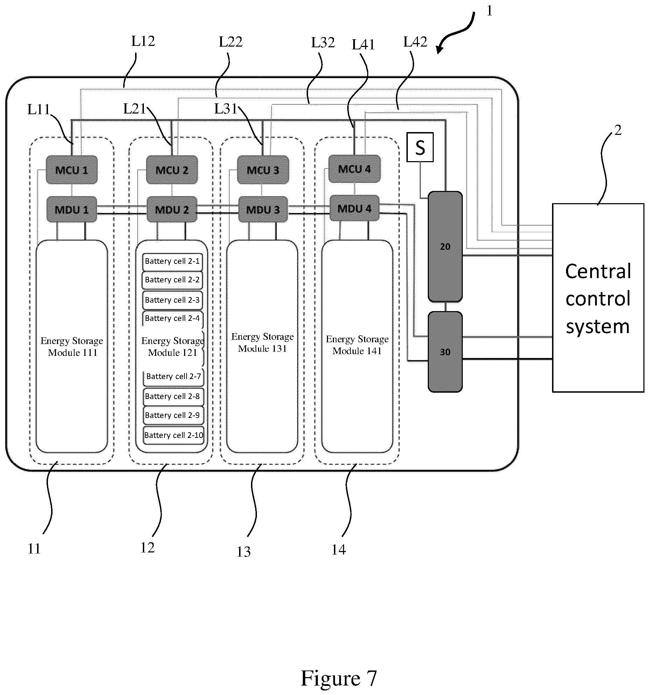

Figure 7 shows a schematic diagram of a control system according to the present disclosure. The control system includes the energy storage system 1 and a central control system 2. The control system is, for example, an aviation control system, a vehicle control system or a control system in other applications. The energy storage controller 20 of the energy storage system 1 and the module controllers (MCU1, MCU2, MCU3 and MCU4) of the respective energy storage units are configured to communicate with the central control system 2 and send status signals of the respective energy storage modules. The central control system 2 corresponds to the above external control unit.

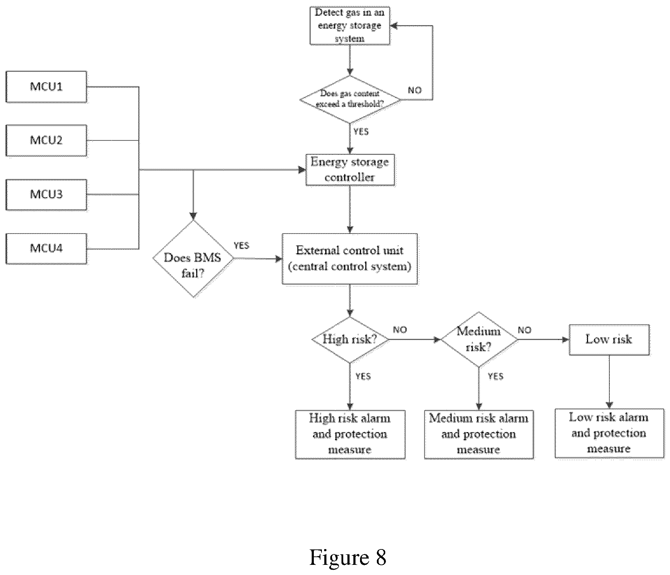

Figure 8 shows a signal flow diagram of the control system in handling an abnormal situation of the energy storage system. As shown in Figure 8, the module controller MCU1 of the first energy storage unit 11, the module controller MCU2 of the second energy storage unit 12, the module controller MCU3 of the third energy storage unit 13 and the module controller MCU4 of the fourth energy storage unit 14 in the energy storage system 1 send abnormal signals of the respective energy storage modules to the energy storage controller 20 and also to an external control unit, that is, the central control system 2. In the example shown in Figure 8, the module controller MCU1, the module controller MCU2, the module controller MCU3 and module controller MCU4, when determining that the energy storage controller 20 malfunctions due to a fault, send the abnormal signals to the central control system 2. When sending the abnormal signals to the energy storage controller 20, the module controller MCU1, the module controller MCU2, the module controller MCU3 and the module controller MCU4 can receive feedback signals when the sent abnormal signals are correctly received by the energy storage controller 20. When the energy storage controller 20 malfunctions , the module controller MCU1, module controller MCU2, module controller MCU3 and module controller MCU4 receive no feedback signal. Therefore, if no feedback signal is received after sending the abnormal signals, the module controller MCU1, the module controller MCU2, the module controller MCU3 and the module controller MCU4 determine that the energy storage controller 20 has malfunctioned, and send the abnormal signals to the external control unit, i.e., the central control system 2. However, it should be noted here that the present disclosure is not limited to this. The module controller MCU1, the module controller MCU2, the module controller MCU3 and the module controller MCU4 may send the abnormal signals to both the energy storage controller 20 and the central control system 2 at the same time, instead of send the abnormal signals to the central control system 2 only when the energy storage controller 20 malfunctions.

In addition, when it is detected that the content of gas (for example, CO, CH₄ or C₃H₈) in the entire energy storage system exceeds the predetermined range, the gas sensor S sends an abnormal signal to the energy storage controller 20.

After receiving an abnormal signal from the module controller MCU1, MCU2, MCU3 or MCU4 and/or receiving a signal from the gas sensor S indicating abnormal gas content in the energy storage system, the energy storage controller 20 sends the abnormal signal to the central control system 2.

The central control system 2 classifies and determines a risk level of the received abnormal signal, and activates the corresponding alarm and protection mechanism. For example, when determining that the received abnormal signal is of a high risk, the central control system 2 activates a high risk alarm and adopts a necessary protection mechanism to activate the protection device, for example, starting a cooling pump for forced cooling. When determining that the received abnormal signal is of a medium risk, the central control system 2 activates a medium risk alarm and adopts corresponding restrictions on the power application of the system. For example, the central control system 2 controls the electrical power of external devices, and the energy distribution unit 30 adapts the output power of the energy storage units accordingly. When determining that the received abnormal signal is of low risk, the central control system 2 only activates a low risk alarm.

Herein, exemplary embodiments of the energy storage system, the safety management method for the energy storage system, and the control system according to the present disclosure have been described in detail with reference to the drawings. However, it should be understood that the present disclosure is not limited to the specific embodiments described and illustrated in detail above. Those skilled in the art can make various modifications and variations to the present disclosure without departing from the spirit and scope of the present disclosure. All such modifications and variations fall within the scope of the present disclosure. Furthermore, all components described herein may be replaced by other technically equivalent components.

## Claims

1. An energy storage system (1), comprising:
a plurality of energy storage units (11-14); and
an energy storage controller (20) configured to communicate with the plurality of energy storage units (11-14), receive abnormal signals of the plurality of energy storage units (11-14), and send the abnormal signals to an external control unit,
**characterized in that** the plurality of energy storage units (11-14) are configured to be capable of sending the abnormal signals to the external control unit.

2. The energy storage system (1) according to claim 1, wherein each of the plurality of energy storage units (11-14) comprises:
an energy storage module (111, 121, 131, 141);
a module distributor (MDU1, MDU2, MDU3, MDU4) configured to connect or disconnect a circuit connection of the energy storage module (111, 121, 131, 141); and
a module controller (MCU1, MCU2, MCU3, MCU4) comprising:
a signal acquisition port (21) configured to receive detection parameters of the energy storage module (111, 121, 131, 141); and
a microprocessor (22) configured to: receive the detection parameters from the signal acquisition port (21) to monitor a status of the energy storage module (111, 121, 131, 141); and send an abnormal signal to the energy storage controller (20) and the external control unit and send a control signal to the module distributor (MDU1, MDU2, MDU3, MDU4) to disconnect the circuit connection of the energy storage module (111, 121, 131, 141), when an abnormality in the energy storage module (111, 121, 131, 141) is detected.

3. The energy storage system (1) according to claim 2, wherein the module controller (MCU1, MCU2, MCU3, MCU4) is configured to send the abnormal signal to the external control unit when a failure of the energy storage controller (20) is detected.

4. The energy storage system (1) according to claim 2, wherein the energy storage modules (111, 121, 131, 141) in the plurality of energy storage units (11-14) are connected with each other in parallel, and the module distributor (MDU1, MDU2, MDU3, MDU4) comprises a first high-voltage contactor (Q1) and a second high-voltage contactor (Q2) connected to a positive pole and a negative pole of the energy storage module (111, 121, 131, 141), respectively; and
wherein when the module distributor of one energy storage unit receives the control signal, the first high-voltage contactor (Q1) and the second high-voltage contactor (Q2) of the one energy storage unit are turned off to disconnect the circuit connection of the energy storage module of the one energy storage unit.

5. The energy storage system (1) according to claim 2, wherein the energy storage modules (111, 121, 131, 141) in the plurality of energy storage units (11-14) are connected with each other in series, the module distributor (MDU1, MDU2, MDU3, MDU4) comprises a first high-voltage contactor (Q1) and a second high-voltage contactor (Q2) connected to a positive pole and a negative pole of the energy storage module (111, 121, 131, 141), respectively, and the module distributor (MDU1, MDU2, MDU3, MDU4) further comprises a third high-voltage contactor (Q3) configured to be turned off when the first high-voltage contactor (Q1) and the second high-voltage contactor (Q2) are turned on; and
wherein when the module distributor of one energy storage unit receives the control signal, the first high-voltage contactor (Q1) and the second high-voltage contactor (Q2) of the one energy storage unit are turned off and the third high-voltage contactor (Q3) of the one energy storage unit is turned on, so as to disconnect the circuit connection of the energy storage module of the one energy storage unit and form a circuit path for energy storage modules in other energy storage units.

6. The energy storage system (1) according to claim 4 or 5, wherein the module distributor (MDU1, MDU2, MDU3, MDU4) further comprises a first fuse (FU1) and a second fuse (FU2) connected to the positive pole and the negative pole of the energy storage module, respectively; and
wherein when a current through the energy storage module (111, 121, 131, 141) is excessively large, the first fuse (FU1) and the second fuse (FU2) are fused to disconnect the circuit connection of the energy storage module (111, 121, 131, 141).

7. The energy storage system (1) according to any one of claims 2 to 5, wherein the energy storage module (111, 121, 131, 141) is a fuel cell, a power battery or a supercapacitor; and/or
wherein the energy storage system is an aviation energy storage system.

8. The energy storage system (1) according to any one of claims 2 to 5, wherein the detection parameters comprise voltage, current, temperature and strain; and/or
wherein the energy storage module (111, 121, 131, 141) comprises a plurality of battery cells, and a flexible sensor strip (150) is embedded inside each of the plurality of battery cells to measure temperature and strain.

9. A safety management method for an energy storage system (1), wherein the energy storage system (1) comprises a plurality of energy storage modules (111, 121, 131, 141) and an energy storage controller (20), and the safety management method comprises:
monitoring statuses of the plurality of energy storage modules (111, 121, 131, 141); and
sending an abnormal signal to the energy storage controller (20) and sending the abnormal signal to an external control unit by the energy storage controller (20), when an abnormality of the plurality of energy storage modules (111, 121, 131, 141) is detected,
**characterized in that** the security management method further comprises directly sending the abnormal signal to the external control unit.

10. The safety management method for an energy storage system (1) according to claim 9, wherein monitoring statuses of the plurality of energy storage modules (111, 121, 131, 141) comprises: acquiring detection parameters of each energy storage module (111, 121, 131, 141) and determining the status of each energy storage module (111, 121, 131, 141); and
wherein the safety management method further comprises: cutting off a circuit connection of the abnormal energy storage module among the plurality of energy storage modules (111, 121, 131, 141) after sending the abnormal signal.

11. The safety management method for an energy storage system (1) according to claim 9, wherein the energy storage module (111, 121, 131, 141) comprises a plurality of battery cells, and the safety management method comprises acquiring detection parameters of each of the plurality of battery cells.

12. The safety management method for an energy storage system (1) according to claim 10, wherein the detection parameters comprise voltage, current, temperature and strain.

13. The safety management method for an energy storage system (1) according to any one of claims 9 to 12, wherein the abnormal signal is directly sent to the external control unit when the energy storage controller (20) fails.

14. The safety management method for an energy storage system (1) according to any one of claims 9 to 12, wherein the energy storage system (1) is an aviation energy storage system.

15. A control system comprising a central control system (2), **characterized in that**:
the control system further comprises the energy storage system (1) according to any one of claims 1 to 8,
wherein the central control system (2) is the external control unit and is configured to receive the abnormal signal and activate an alarm and corresponding protection device according to the abnormal signal.
